# EUROPÄISCHE PATENTSCHRIFT

(11) **EP 2 266 850 B1**
(45) Veröffentlichungstag und Bekanntmachung des Hinweises auf die Patenterteilung: **21.03.2018**
(21) Anmeldenummer: 10005096.2
(22) Anmeldetag: 14.05.2010
(51) Int. Cl.: B60T 7/10

(54) **Betätigungsvorrichtung für eine Feststellbremse**
Activation device for a parking brake
Dispositif d'actionnement pour un frein de stationnement

(30) Priorität: 26.06.2009 DE 202009008794 U
(43) Veröffentlichungstag der Anmeldung: 29.12.2010
(73) Patentinhaber: Power-Cast Light Metal Solutions GmbH & Co. KG, 73278 Schlierbach (DE)
(72) Erfinder: Schweikle, Joachim, 71665 Vaihingen/Enz-Aurich (DE)
(74) Vertreter: Ruckh, Rainer Gerhard

(56) Entgegenhaltungen:
- EP-A1- 0 349 815
- EP-A1- 0 582 934
- DE-U1- 29 721 843
- DE-U1-202007 010 787

## Beschreibung

Die Erfindung betrifft eine Betätigungsvorrichtung für eine Feststellbremse gemäß dem Oberbegriff des Anspruchs 1.

Eine Betätigungsvorrichtung für eine Feststellbremse ist aus der DE 195 21 159 C2 bekannt. Diese Betätigungsvorrichtung umfasst einen Handbremshebel, der an einem Lagerbock schwenkbar gelagert ist. Zur Betätigung der Feststellbremse ist eine einzelne Betätigungsstange als Betätigungsgestänge vorgesehen, die in Eingriff mit einer Festsetzeinrichtung steht. Die Betätigungsstange verläuft in einer rohrförmigen Aufnahme des Handbremshebels. Am vorderen Ende der Betätigungsstange ist ein Druckknopf vorgesehen, der über die rohrförmige Aufnahme hervorsteht und von einer Bedienperson betätigbar ist.

Die Festsetzeinrichtung besteht aus einem Sperrsegment und einer Sperrklinke. Das Sperrsegment ist am Lagerbock befestigt und weist eine Leiste mit Rastzähnen auf. Die Sperrklinke ist an einem Lagerzapfen des Handbremshebels schwenkbar gelagert und über ein Federelement vorgespannt. Dabei ist die Sperrklinke so am Lagerzapfen gelagert, dass diese in zwei beidseits des Lagerzapfens verlaufende Schwenkarme unterteilt ist. An einem Ende des ersten Schwenkarms sind Rastnasen vorgesehen, die zur Fixierung der Sperrklinke am Sperrsegment in die Rastzähne des Sperrsegments greifen. Das Ende des zweiten Schwenkarmes ist über eine Gelenkverbindung am unteren Ende der Betätigungsstange befestigt.

Zur Betätigung der Feststellbremse wird der Handbremshebel geschwenkt. Die Schwenkbewegung wird über die Betätigungsstange auf die Sperrklinke übertragen. In einer Endposition rastet die Sperrklinke an dem Sperrsegment ein und fixiert den Handbremshebel in der entsprechenden Position.

Bei derartigen Betätigungsvorrichtungen wird die jeweilige Schwenkstellung des Handbremshebels typischerweise über einen Seilzug auf die Feststellbremse übertragen. Während des Betriebs der Betätigungsvorrichtung kommt es, bedingt durch Verschleiß und Abnutzung von Bauteilen, zu einer Reduzierung der Seilzugspannung, wodurch die Funktion der Feststellbremse beeinträchtigt werden kann. Um eine fehlerfreie Funktion der Feststellbremse zu gewährleisten, muss der Seilzug von Zeit zu Zeit nachgestellt werden, damit dieser mit der erforderlichen Kraft gespannt ist. Üblicherweise erfolgt eine derartige Nachstellung des Seilzugs in vorgegebenen Zeitabständen durch das Wartungspersonal. Das manuelle Nachstellen des Seilzugs ist jedoch relativ zeitaufwändig.

Aus der DE 10 2005 057 036 A1 ist eine Betätigungsvorrichtung für eine Feststellbremse bekannt, welche einen an einem Lagebock schwenkbar gelagerten Handbremshebel, eine Festsetzeinrichtung zur Fixierung der Handbremshebel in einer Rastposition und einen Seilzug zur Übertragung der aktuellen Schwenkstellung des Handbremshebels auf die Feststellbremse umfasst. Weiterhin ist eine Seilzugnachstelleinheit vorgesehen, die ein Anschlusselement für den Seilzug umfasst, welches in Wirkverbindung mit einer Arretierungseinheit und einer Rückstelleinheit steht. Die Arretierungseinheit blockiert das Anschlusselement in Richtung der wirkenden Seilzugkraft und die Rückstelleinheit gibt eine entgegen der Seilzugkraft wirkende Rückstellkraft vor, mittels derer das Anschlusselement entgegen der Richtung der wirkenden Seilzugkraft verschiebbar ist.

Mit dieser Seilzugnachstelleinheit wird eine selbsttätige Nachstellung des Seilzugs ermöglicht, wodurch ein wartungsarmer Betrieb der Betätigungsvorrichtung gewährleistet ist.

Die Seilzugnachstelleinheit der erfindungsgemäßen Betätigungsvorrichtung umfasst ein Anschlusselement für den Seilzug, welches bevorzugt in Form einer Stange mit einer Linearanordnung von Zahnungen ausgebildet ist und welches in Wirkverbindung mit einem Arretierungssegment und einer Rückstelleinheit in Form einer steht. Mit dem Arretierungssegment wird das Rastsegment blockiert, so dass dieses nicht in Richtung der wirkenden Seilzugkraft verschoben werden kann, das heißt, durch das Arretierungssegment kann das Rastsegment nur entgegen der Seilzugkraft verschoben werden. Die hierfür erforderliche Rückstellkraft wird von der Rückstelleinheit gebildet.
Nachteilig ist jedoch, dass zur Ausbildung der Seilzugnachstelleinheit und deren Lagerung am Handbremshebel ein relativ hoher konstruktiver Aufwand nötig ist. So ist zur Lagerung der Seilzugnachstelleinheit am Handbremshebel eine Hülse erforderlich, die einen beträchtlichen Bauraum beansprucht. Weiterhin ist der Handbremshebel mehrteilig ausgebildet, wobei die einzelnen Teile des Handbremshebels die Hülse aufnehmen. Dabei ist an einem Teil des Handbremshebels ein rohrförmiger Ansatz notwendig, um die Hülse aufnehmen zu können.

Die DE 297 21 843 U1 betrifft eine Seilzugeinstellung für eine Bremseinrichtung, bestehend aus einem mit dem Seilzug verbundenen Zugelement und einem mit dem Bremshebel verbundenen Führungsteil, die aneinander geführt sind, wobei die Seilzugeinstellung ein lösbares Rastgesperre und eine Feder aufweist, die auf das Zugelement einwirken. Das Rastgesperre und die Feder sind zwischen dem Führungsteil und dem Zugelement angeordnet.

Die EP 0 349 815 A1 betrifft eine karosserieaußenseitig zu montierende Nachstellvorrichtung für eine Fahrzeug-Feststellbremse zum selbsttätigen Ausgleich von Seilstranglängen. Diese weist ein mit einer Lagerachse an einer Zuglasche verschiebbar geführtes, einstückiges Seiljoch auf, dessen Jochendstücke jeweils einen Seilstrang halten und an dem eine am Umfang Rastausnehmungen aufweisende und sich an einem laschenfesten Abstützglied abstützende Kurvenscheibe verdrehbar gelagert ist. Zum Spannen der Seilstränge ist die Kurvenscheibe durch eine an der Zuglasche abgestützte Drehfeder verdrehbar.

Die DE 20 2007 010 787 U1 betrifft eine Seilzugeinstellung für einen oder mehrere Seilzüge. Die Seilzugseinstellung weist ein Gehäuse mit einer lösbaren Rasteinrichtung zur verstellbaren Verbindung des Gehäuses mit einem Übertragungselement auf, welches mit einem oder mehreren Seilzügen verbindbar ist, wobei die Seilzugeinstellung eine entfernbare Montagesicherung für das Übertragungselement aufweist.
Der Erfindung liegt die Aufgabe zugrunde, eine Betätigungsvorrichtung für eine Feststellbremse bereitzustellen, für welche bei geringem Wartungsaufwand eine fehlerfreie Funktion gewährleistet ist.
Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.
Die erfindungsgemäße Betätigungsvorrichtung für eine Feststellbremse umfasst einen an einem Lagerbock schwenkbar gelagerten Handbremshebel, eine Festsetzeinrichtung zur Fixierung des Handbremshebels in einer Rastposition und einen Seilzug zur Übertragung der aktuellen Schwenkstellung des Handbremshebels auf die Feststellbremse. Dem Seilzug ist eine selbsttätig arbeitende Seilzugnachstelleinheit zugeordnet. Das Anbindungselement weist zwei Schenkel auf, wobei zwei aufeinander aufliegende Segmente der Schenkel eine Öse zur Ankopplung an den Handbremshebel bilden. Die Schenkel laufen in einem an die Öse anschließenden Übergangsbereich V-förmig auseinander. In einem daran anschließenden Endbereich verlaufen sie parallel in Abstand zueinander. Die Schenkel sind im Endbereich von einer Feder umschlossen, die eine Rückstelleinheit der Seilzugnachstelleinheit bildet. Die Komponenten der Seilzugnachstelleinheit sind an dem Anbindungselement austauschbar angeordnet sind.

Die Seilzugnachstelleinheit der erfindungsgemäßen Betätigungsvorrichtung umfasst ein Rastsegment für den Seilzug, welches bevorzugt in Form einer Stange ausgebildet ist, mit einer Linearanordnung von Zahnungen versehen ist und welches in Wirkverbindung mit einem Arretierungssegment und einer Rückstelleinheit in Form einer Feder steht. Mit dem Arretierungssegment wird das Rastsegment blockiert, so dass dieses nicht in Richtung der wirkenden Seilzugkraft verschoben werden kann, das heißt, durch das Arretierungssegment kann das Rastsegment nur entgegen der Seilzugkraft verschoben. Die hierfür erforderliche Rückstellkraft wird von der Rückstelleinheit gebildet.

Durch eine geeignete Dimensionierung der Feder kann die Rückstellkraft auf einfache Weise vorgegeben werden. Die Größe der Rückstellkraft legt dabei fest, bei welcher Seilzugspannung ein automatisches Nachstellen des Seilzugs erfolgt, in dem bedingt durch die Rückstellkraft das Anschlusselement in der Arretierungseinheit um ein vorgegebenes Wegstück entgegen der Seilzugkraft weiter geschoben wird und dann wieder mit dem Arretierungssegment arretiert wird.

Da allein durch die Vorgabe der Rückstellkraft der Rückstelleinheit der Seilzug selbsttätig nachgestellt und mit dem Arretierungssegment lagefixiert wird, entfällt eine manuelle Justage der Seilzugspannung.

Mit dem erfindungsgemäßen Anbindungselement wird eine konstruktiv einfache Ankopplung der Seilzugnachstelleinheit an den Handbremshebel ermöglicht. Dabei ist insbesondere vorteilhaft, dass das Anbindungselement lokal an einem einzigen Teil des Handbremshebels angebunden werden kann, wodurch der Handbremshebel selbst einen konstruktiv einfachen Aufbau aufweisen kann, da dieser keine separaten Teile zur Anbindung der Seilzugnachstelleinheit aufweisen muss.

Besonders vorteilhaft bildet das Anbindungselement eine Gelenkverbindung mit dem Handbremshebel, die nur ein geringes Bauvolumen beansprucht, was bedeutet, dass auch der Handbremshebel eine kompakte Bauform aufweisen kann.

Erfindungsgemäß weist das Anbindungselement eine Öse auf, durch welche ein Stift geführt wird, welcher an seinen endseitigen Enden am Handbremshebel gelagert ist.

Die so ausgebildete Gelenkverbindung weist einen äußerst einfachen und kostengünstigen Aufbau auf.

Die Öse ist von zwei aufeinander aufliegenden Segmenten zweier Schenkel als Bestandteilen des Anbindungselements gebildet. Die Schenkel laufen in einen an die Öse anschließenden Übergangsbereich V-förmig auseinander und in einem anschließenden Endbereich parallel in Abstand zueinander. Die Schenkel des Anbindungselements sind identisch ausgebildet. Die Schenkel sind im Endbereich von einer Feder umschlossen, die eine Rückstelleinheit der Seilzugnachstelleinheit bilden.

Das aus den Schenkeln gebildete Anbindungselement kann kostengünstig hergestellt werden und beansprucht einen geringen Bauraum.

Die Schenkel des Anbindungselements bestehen aus einem metallischen Werkstoff und können durch Biegeprozesse oder durch Spritzgussverfahren zur Ausbildung der Form des Anbindungselements einfach geformt werden. Durch Zusammenfügen der Enden zur Öse wird ein einfach aufgebautes Schnittstellenelement zur Ankopplung an den Handbremshebel erhalten. Dabei ist insbesondere vorteilhaft, dass die Öse und der durch die Öse geführte Stift nur einen äußerst kleinen Bauraum beanspruchen, so dass für die Aufnahme dieser Komponenten am Handbremshebel dieser keine zusätzlichen Teile aufweisen muss.

Ein weiterer wesentlicher Vorteil des erfindungsgemäßen Anbindungselements besteht darin, dass mit diesem nicht nur eine einfache Montage der Seilzugnachstelleinheit am Handbremshebel gewährleistet ist. Vielmehr ist auch ein schneller Austausch von Komponenten der Seilzugnachstelleinheit möglich.

Die Erfindung wird im Folgenden anhand der Zeichnungen erläutert. Es zeigen:
- Figur 1:: Ausführungsbeispiel der erfindungsgemäßen Betätigungsvorrichtung für eine Feststellbremse.
- Figur 2:: Ansicht der Betätigungsvorrichtung gemäß Figur 1 von unten.
- Figur 3:: Einzeldarstellung eines Anbindungselements für die Betätigungsvorrichtung gemäß den Figuren 1 und 2.

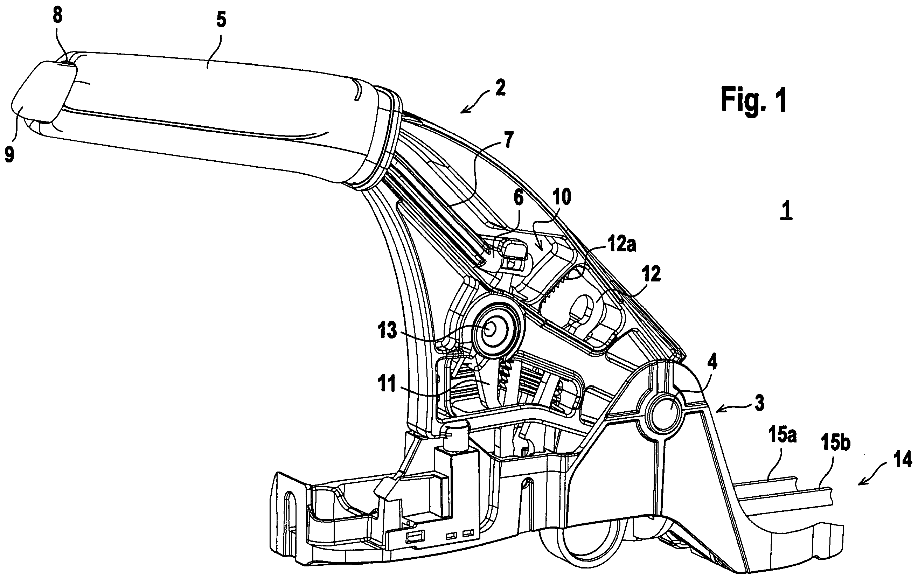

Figur 1 zeigt ein Ausführungsbeispiel der erfindungsgemäßen Betätigungsvorrichtung 1 für eine Feststellbremse in einem Fahrzeug.

Die Betätigungsvorrichtung 1 weist einen Handbremshebel 2 auf, welcher um eine horizontale Achse schwenkbar an einem Lagerbock 3 gelagert ist. Der Handbremshebel 2 ist dabei an einem Lagerzapfen 4 schwenkbar gelagert. Der Handbremshebel 2 weist einen Grundkörper auf, dessen Vorderende in Form eines Rohrsegments ausgebildet ist. Auf diesem Rohrsegment ist ein Griff 5 gelagert.

Die jeweilige Stellung des Handbremshebels 2 wird über einen nicht dargestellten Seilzug auf die ebenfalls nicht dargestellte Feststellbremse des Fahrzeugs übertragen.

In dem Handbremshebel 2 ist eine Betätigungsstange 6 gelagert, die im vorliegenden Fall einstückig ausgebildet ist und aus einem Kunststoff-Spritzteil besteht. Die Betätigungsstange 6 ist in einem Hohlraum 7 des Handbremshebels 2 geführt und steht über das vordere Ende des Rohrsegments hervor. An diesem Vorderende der Betätigungsstange 6 ist in eine Öffnung 8 des Griffs 5 ein Druckknopf 9 befestigt. Die Betätigung des Druckknopfs 9 erfolgt gegen eine von nicht dargestellten Rückstellfedern ausgeübte Federkraft.

Die Betätigungsstange 6 ist an eine Festsetzeinrichtung 10 gekoppelt. Mit dieser Festsetzeinrichtung 10 kann der Handbremshebel 2 in einer vorgegebenen Schwenkstellung fixiert werden. Die Festsetzeinrichtung 10 weist eine Sperrklinke 11 und ein Sperrsegment 12 auf. Das Sperrsegment 12 ist fest mit dem Lagerbock 3 verbunden und weist eine Leiste mit Rastzähnen 12a auf. Die Sperrklinke 11 weist an ihrem unteren Ende eine Rastnase auf, die an den Rastzähnen 12a des Sperrsegments 12 eingerastet werden kann. Das obere Ende der Sperrklinke 11 ist mit der Betätigungsstange 6 gekoppelt.

Die Sperrklinke 11 ist an einem Lagerzapfen 13 um eine Schwenkachse drehbar am Handbremshebel 2 gelagert. Im Bereich des Lagerzapfens 13 ist zudem eine nicht dargestellte Klinkenfeder gelagert. Diese Klinkenfeder greift an dem dem Sperrsegment 12 abgewandten Rand der Sperrklinke 11 an und übt somit eine Kraft auf die Sperrklinke 11 in Richtung des Sperrsegments 12 aus.

Zur Fixierung des Handbremshebels 2 befindet sich die Sperrklinke 11 in einer Raststellung am Sperrsegment 12. Durch Betätigung des Druckknopfs 9 kann die Sperrklinke 11 aus dem Sperrsegment 12 gelöst und damit der Handbremshebel 2 geschwenkt werden. Die Schwenkbewegung des Handbremshebels 2 wird dann auf den Seilzug übertragen.

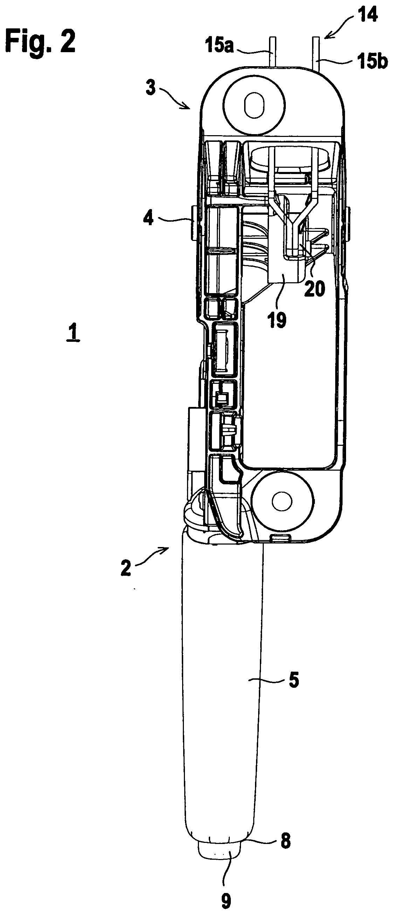

Um auch bei Verschleiß oder anderen Störeinflüssen eine unerwünschte Reduzierung der Seilzugspannung zu vermeiden, ist bei der Betätigungsvorrichtung 1 eine selbsttätig arbeitende Seilzugnachstelleinheit vorgesehen, deren Komponenten in den Figuren 1 und 2 nicht dargestellt sind.
Zur Ankopplung der Seilzugnachstelleinheit an den Handbremshebel 2 ist ein Anbindungselement 14 vorgesehen. Das einstückig ausgebildete Anbindungselement 14 besteht aus einem metallischen Werkstoff. Wie aus den Figuren 1 und 2 ersichtlich, mündet das Anbindungselement 14 im unteren Bereich des Lagerbocks 3 aus.

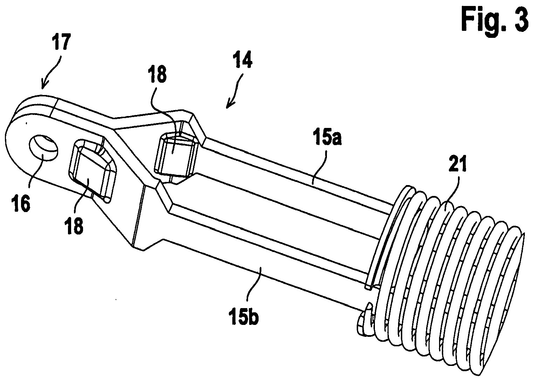

Figur 3 zeigt das Anbindungselement 14 in einer vergrößerten Darstellung, wobei in Figur 3 wie in den Figuren 1 und 2 nur der dem Handbremshebel 2 zugewandte vordere Teil des Anbindungselements 14 dargestellt ist.
Das Anbindungselement 14 weist zwei identisch ausgebildete Schenkel 15a, 15b auf. Die Schenkel 15a, 15b verlaufen im hinteren Endbereich des Anbindungselements 14 parallel zueinander. Im vorderen Bereich verlaufen die Schenkel 15a, 15b V-förmig. Durch diesen V-förmigen Verlauf laufen die Schenkel 15a, 15b zum Vorderende des Anbindungselements 14 aufeinander zu, so dass die Segmente der Schenkel 15a, 15b am vorderen Rand des Anbindungselements 14 dicht aufeinander liegen. In diesem vorderen Randbereich ist in die kongruent aufeinander liegenden Segmente eine Bohrung 16 eingearbeitet. Damit bilden diese Bereiche der Schenkel 15a, 15b eine Öse 17, die zur Ankopplung des Anbindungselements 14 an den Handbremshebel 2 dient.

Wie aus Figur 3 ersichtlich, sind die Breiten der Schenkel 15a, 15b im Endbereich des Anbindungselements 14, in welchem diese parallel zueinander verlaufen, kleiner als im vorderen Bereich des Anbindungselements 14, wo die Schenkel 15a, 15b aufeinander zulaufen.
In den Übergangsbereichen, das heißt im Übergang vom Endbereich des Anbindungselements 14, wo die Schenkel 15a, 15b parallel laufen, zu dem Bereich, in dem die Schenkel 15a, 15b V-förmig laufen, sowie im Übergang von dem letzteren Bereich zum Bereich die Öse 17, weisen die Schenkel 15a, 15b Wandverstärkungen 18 auf, um dort für eine ausreichende Stabilität des Anbindungselements 14 zu sorgen.

Figur 2 zeigt die Ankopplung des Anbindungselements 14 an den Handbremshebel 2. Im unteren Bereich weist der Handbremshebel 2 ein Segment auf, das als Halterung 19 für das Anbindungselement 14 dient. Wie aus Figur 2 ersichtlich, weist diese Halterung 19 einen L-förmigen Querschnitt auf. Zur Montage des Anbindungselements 14 wird der Öse 17 des Anbindungselements 14 seitlich an die Halterung 19 gelegt, dann wird ein Stift 20 mit kreisförmigem Querschnitt in die Bohrung 16 der Öse 17 und in eine anschließende Bohrung 16 der Halterung 19 gesteckt, wonach der Stift 20 gegen ein Herauslösen aus den Bohrungen 16 gesichert wird. Somit wird eine Gelenkverbindung zwischen dem Anbindungselement 14 und dem Handbremshebel 2 erhalten.

Wie aus Figur 3 ersichtlich, sind die parallel verlaufenden Segmente der Schenkel 15a, 15b des Anbindungselements 14 von einer Feder 21 umschlossen. Diese Feder 21 ist in den Figuren 1 und 2 nicht dargestellt.

Die Feder 21 bildet eine Rückstelleinheit als Bestandteil der Seilzugnachstelleinheit. Weitere Komponenten der Seilzugnachstelleinheit, insbesondere ein Arretierungssegment und ein Rastsegment, sind in einer nicht dargestellten Aufnahme am hinteren Ende des Anbindungselements 14 gelagert. Die Komponenten der Seilzugnachstelleinheit können an dem Anbindungselement 14 schnell und einfach ausgetauscht werden.

### Bezugszeichenliste

- (1): Betätigungsvorrichtung
- (2): Handbremshebel
- (2a): Handgriff
- (3): Lagerbock
- (4): Lagerzapfen
- (5): Griff
- (6): Betätigungsstange
- (7): Hohlraum
- (8): Öffnung
- (9): Druckknopf
- (10): Festsetzeinrichtung
- (11): Sperrklinke
- (12a): Rastzähne
- (12): Sperrsegment
- (13): Lagerzapfen
- (14): Anbindungselement
- (15a): Schenkel
- (15b): Schenkel
- (16): Bohrung
- (17): Öse
- (18): Wandverstärkungen
- (19): Halterung
- (20): Stift
- (21): Feder

## Patentansprüche

1. Betätigungsvorrichtung für eine Feststellbremse, mit einem an einem Lagerbock schwenkbar gelagerten Handbremshebel, mit einer Festsetzeinrichtung zur Fixierung des Handbremshebels in einer Rastposition und mit einem Seilzug zur Übertragung der aktuellen Schwenkstellung des Handbremshebels auf die Feststellbremse, wobei dem Seilzug eine selbsttätig arbeitende Seilzugnachstelleinheit zugeordnet ist, wobei die Seilzugnachstelleinheit ein Anbindungselement (14) aufweist, mittels dessen eine Ankopplung der Seilzugnachstelleinheit an einem einzigen Teil des Handbremshebels (2) bewerkstelligt ist, **dadurch gekennzeichnet, dass** das Anbindungselement (14) zwei Schenkel (15a, 15b) aufweist, wobei zwei aufeinander aufliegende Segmente der Schenkel (15a, 15b) eine Öse (17) zur Ankopplung an den Handbremshebel (2) bilden, dass die Schenkel (15a, 15b) in einem an die Öse (17) anschließenden Übergangsbereich V-förmig auseinanderlaufen und in einem daran anschließenden Endbereich parallel in Abstand zueinander verlaufen, dass die Schenkel (15a, 15b) im Endbereich von einer Feder (21) umschlossen sind, die eine Rückstelleinheit der Seilzugnachstelleinheit bildet, und dass die Komponenten der Seilzugnachstelleinheit an dem Anbindungselement (14) austauschbar angeordnet sind.

2. Betätigungsvorrichtung nach Anspruch 1, **dadurch gekennzeichnet, dass** das Anbindungselement (14) eine Gelenkverbindung mit dem Handbremshebel (2) bildet.

3. Betätigungsvorrichtung nach einem der Ansprüche 1 oder 2, **dadurch gekennzeichnet, dass** das Anbindungselement (14) eine Öse (17) aufweist, durch welche ein Stift (20) geführt ist, welcher an seinen längsseitigen Enden am Handbremshebel (2) gelagert ist.

4. Betätigungsvorrichtung nach einem der Ansprüche 1 bis 3, **dadurch gekennzeichnet, dass** die Schenkel (15a, 15b) des Anbindungselements (14) identisch ausgebildet sind.

5. Betätigungsvorrichtung nach Anspruch 4, **dadurch gekennzeichnet, dass** die Seilzugnachstelleinheit ein eine Linearanordnung von Zahnungen aufweisendes Rastsegment und ein Arretierungssegment, welches an unterschiedlichen Positionen des Rastsegments einrastbar ist, aufweist.

6. Betätigungsvorrichtung nach Anspruch 5, **dadurch gekennzeichnet, dass** das Arretierungssegment bei Einrasten am Rastsegment dieses in Richtung der wirkenden Seilzugkraft wirkende Rückstellkraft vorgibt, mittels derer das Rastsegment entgegen der Seilzugkraft verschiebbar ist.

## Claims

1. Activation device for a parking brake, comprising a handbrake lever pivotably mounted on a bearing block, a fixing device for fixing the handbrake lever in a detent position and a cable pull for transmission of the instantaneous pivot setting of the handbrake lever to the parking brake, wherein an automatically operating cable pull adjusting unit is associated with the cable pull and wherein the cable pull adjusting unit comprises a coupling element (14), by means of which coupling of the cable pull adjusting unit to an individual part of a handbrake lever (2) is provided, **characterised in that** the coupling element (14) has two limbs (15a, 15b), wherein two mutually contacting segments of the limbs (15a, 15b) form an eye (17) for coupling to the handbrake lever (2), that the limbs (15a, 15b) run apart in V-shape in a transition region adjoining the eye (17) and extend parallelly at a mutual spacing in an end region adjoining thereat, that the limbs (15a, 15b) are surrounded in the end region by a spring (21) forming a restoring unit of the cable pull adjusting unit, and that the components of the cable pull adjusting unit are exchangeably arranged at the coupling element (14).

2. Activation device according to claim 1, **characterised in that** the coupling element (14) forms a pivot connection with the handbrake lever (2).

3. Activation device according to one of claims 1 and 2, **characterised in that** the coupling element (14) has an eye (17) through which is guided a pin (20) mounted at its longitudinal-side ends at the handbrake lever (2).

4. Activation device according to any one of claims 1 to 3, **characterised in that** the limbs (15a, 15b) of the coupling element (14) are of identical construction.

5. Activation device according to claim 4, **characterised in that** the cable pull adjusting unit comprises a detent segment having a linear arrangement of teeth and a locking element detentable at different positions of the detent segment.

6. Activation device according to claim 5, **characterised in that** the locking segment when detented at the detent segment presets this restoring force acting in the direction of the effective cable pull force, by means of which restoring force the detent segment is displaceable against the pull cable force.

## Revendications

1. Dispositif d'actionnement dévolu à un frein d'immobilisation, comprenant un levier de freinage manuel monté à pivotement sur un palier de support ; un système de consignation à demeure, dédié au blocage dudit levier de freinage manuel en un emplacement encliqueté ; et un câble de traction réalisé pour répercuter, sur ledit frein d'immobilisation, la position effective que ledit levier de freinage manuel a prise par pivotement, une unité de rattrapage à fonctionnement automatique étant associée audit câble de traction, laquelle unité de rattrapage du câble de traction est munie d'un élément de rattachement (14) instaurant un couplage de ladite unité de rattrapage dudit câble de traction avec une unique partie dudit levier (2) de freinage manuel, **caractérisé par le fait que** l'élément de rattachement (14) comporte deux branches (15a, 15b), sachant que deux segments desdites branches (15a, 15b), reposant l'un sur l'autre, forment un oeillet (17) affecté au couplage avec le levier (2) de freinage manuel ; **par le fait que** lesdites branches (15a, 15b) divergent l'une de l'autre, avec configuration en V, dans une zone de transition adjacente audit oeillet (17), puis s'étendent parallèlement à distance l'une de l'autre dans une région extrême attenante ; **par le fait que** lesdites branches (15a, 15b) sont ceinturées, dans ladite région extrême, par un ressort (21) constituant une unité de rappel de l'unité de rattrapage du câble de traction ; et **par le fait que** les pièces constitutives de ladite unité de rattrapage dudit câble de traction sont disposées sur ledit élément de rattachement (14), avec faculté de remplacement ou d'échange.

2. Dispositif d'actionnement selon la revendication 1, **caractérisé par le fait que** l'élément de rattachement (14) forme une liaison articulée avec le levier (2) de freinage manuel.

3. Dispositif d'actionnement selon l'une des revendications 1 ou 2, **caractérisé par le fait que** l'élément de rattachement (14) présente un oeillet (17) à travers lequel est guidée une broche (20) montée, par ses extrémités longitudinales, sur le levier (2) de freinage manuel.

4. Dispositif d'actionnement selon l'une des revendications 1 à 3, **caractérisé par le fait que** les branches (15a, 15b) de l'élément de rattachement (14) sont de réalisations identiques.

5. Dispositif d'actionnement selon la revendication 4, **caractérisé par le fait que** l'unité de rattrapage du câble de traction comprend un segment d'encliquetage, doté d'un ensemble rectiligne de dentures, et un segment d'arrêt pouvant être cranté en différents emplacements dudit segment d'encliquetage.

6. Dispositif d'actionnement selon la revendication 5, **caractérisé par le fait que**, lors du crantage sur le segment d'encliquetage, le segment d'arrêt prédéfinit une force de rappel qui agit dans la direction de la force opérante du câble de traction, et au moyen de laquelle ledit segment d'encliquetage peut être déplacé en opposition à ladite force du câble de traction.
